# EUROPÄISCHE PATENTSCHRIFT

(11) **EP 2 058 166 B1**
(45) Veröffentlichungstag und Bekanntmachung des Hinweises auf die Patenterteilung: **20.10.2010**
(21) Anmeldenummer: 08168974.7
(22) Anmeldetag: 12.11.2008
(51) Int. Cl.: B60N 2/427, B60N 2/48, B60N 2/68

(54) **Lehne für einen Kraftfahrzeugsitz**
Backrest for an automotive vehicle seat
Dossier pour un siège de véhicule automobile

(30) Priorität: 12.11.2007 DE 102007053896
(43) Veröffentlichungstag der Anmeldung: 13.05.2009
(73) Patentinhaber: Alutech Gesellschaft m.b.H., 5651 Lend (AT)
(72) Erfinder: Garnweidner, Peter, 5112, Lamprechtshausen (AT); Danninger, Christian, 5204, Straßwalchen (AT)
(74) Vertreter: Wilhelms · Kilian & Partner Patentanwälte

(56) Entgegenhaltungen:
- EP-A- 0 330 594
- DE-A1- 4 238 549
- DE-A1- 4 442 588
- DE-C2- 3 050 958
- DE-U1- 29 918 761
- US-A- 5 816 658

## Beschreibung

Die Erfindung betrifft eine Lehne für einen Sitz eines Kraftfahrzeuges.

Die Merkmale des Oberbegriffes des Patentanspruches 1 sind aus DE 3050958 C2 und DE 4442588 A1 bekannt.

Lehnen für Kraftfahrzeugsitze weisen als Sicherheitsmerkmal eine Kopfstütze auf, die bei einem, Aufprall beispielsweise auf das Heck des Kraftfahrzeuges verhindert, dass der Kopf des Insassen nach hinten abknickt und es dadurch zu einem Schleudertrauma/Peitschenschlagsyndrom kommt.

EP-A-330 594 beschreibt einen als Hohlprofil ausgebildeten Querträger einer Sitzlehne, durch den Streben einer Kopfstütze durchgeführt sind. Seitlich ist der Querträger mit jeweils einem Seitenholm des Sitzes verbunden. US 5,816,658 A beschreibt eine höhenverstellbare Befestigung einer Kopfstütze. In DE 42 38 549 A1 ist ein Fahrzeugsitz beschrieben, der einen Sitzrahmen und einen im Kollisionsfall verformbaren, gegossenen Rückenlehnenrahmen umfasst.

Für eine effektive Verhinderung eines Schleudertraumas ist es wichtig, dass der Kopf des Insassen des Fahrzeuges möglichst wenig nach hinten verlagert wird und nach Auftreffen des Kopfes auf die Kopfstütze der Kopf zusammen mit dem Oberkörper lediglich eine Bewegung in Form einer Rotation um das Hüftgelenk durchführt, wodurch eine Bewegung-im Bereich-der Nackenwirbel nahezu vermieden wird.

Um dies zu erreichen, könnte die Kopfstütze weiter vorne in der Nähe des Kopfes montiert werden. Dies würde allerdings den Sitzkomfort erheblich einschränken.

Weiterhin besteht die Möglichkeit, aktive Kopfstützen zu verwenden, die sich im Fall einer Kollision des Kraftfahrzeuges nach vorne bewegen. Diese Möglichkeit ist jedoch aufwendig und teuer.

Im Allgemeinen werden Lehnen aus tiefgezogenen Blechteilen aus Stahl, die miteinander verschweißt werden, konstruiert, wobei die Verbindung der Kopfstütze mit der Lehne über ein mit einem Querträger im oberen Bereich der Lehne verbundenes Führungssystem bewerkstelligt wird. Nachteil hierbei ist, dass der das Führungssystem aufweisende Querträger, der im oberen Bereich der Lehne angeordnet ist, ebenfalls aus einem tiefgezogenen Blechteil hergestellt ist, das beim Aufprall keine ausreichende Torsionssteifigkeit aufweist. Aufgabe des Querträgers ist es, alle auf die Kopfstütze ausgeübten Kräfte in die Lehne einzuleiten und keine Verschiebung der Kopfstütze zuzulassen. Außerdem müssen tiefgezogene Blechteile vollständig verschweißt werden, damit sich konstruktiv hohe Torsionssteifigkeiten realisieren lassen.

Es ist daher eine Aufgabe der Erfindung, eine Lehne für einen Kraftfahrzeugsitz zu schaffen, die das Risiko eines Schleudertraumas im Falle einer Kollision des Fahrzeuges vermeidet bzw. verringert.

Diese Aufgabe wird durch eine Lehne für einen Sitz eines Kraftfahrzeuges mit den Merkmalen des Anspruches 1 gelöst.

Im Kollisionsfall des Kraftfahrzeuges wird die Aufprallenergie des Oberkörpers des auf dem Kraftfahrzeugsitz befindlichen Insassen zunächst von der Sitzpolsterung aufgenommen. Ist die Aufprallenergie allerdings derart groß, dass diese nicht mehr vollständig von der Sitzpolsterung aufgenommen werden kann und der Oberkörper im Bereich der Schulterpartie an das Deformationselement anschlägt, wird ein Teil dieser Energie durch Deformation des Deformationselements abgeführt. Während dieser Deformation wird der Kopf des Insassen in Anlage mit der Kopfstütze gebracht. Dadurch, dass der Querträger als Hohlprofil mit sehr hoher Torsionssteifigkeit ausgebildet ist, wird folglich der Kopf relativ zum Oberkörper nicht weiter nach hinten verlagert, wodurch das Risiko eines Schleudertraumas und ein Abknicken des Kopfes des Insassen zumindest minimiert wird. Ebenso wird durch den torsionssteifen Querträger ein struktursteifes Verhalten der Kopfstütze ermöglicht.

Die Deformationselemente können so ausgebildet und angeordnet sein, dass durch diese zusätzlicher Bauraum (Blocklänge) zur Aufnahme des Lehnenpolsters zur Verfügung gestellt wird, wodurch erst bei einem übermäßigen Einsinken der Schulterpartie des Insassen das Deformationselement leicht deformiert wird, ohne dass der Querträger beschädigt wird.

Bevorzugte Ausgestaltungen und Weiterbildungen der Erfindung sind Gegenstand der Unteransprüche 2 bis 10.

Im Folgenden wird eine bevorzugte Ausführungsform der erfindungsgemäßen Lehne unter Bezug auf die beigefügten Zeichnungen erläutert.
Fig. 1 zeigt eine perspektivische Ansicht einer Lehne gemäß einer Ausführungsform der Erfindung,
Fig. 2 zeigt die Lehne aus Fig. 1 von vorne, in der Schnittlinien der in den Figuren 3 und 4 gezeigten Schnittansichten enthalten sind,
Fig. 3 ist eine Schnittansicht entlang der Schnittlinie A-A aus Fig. 2, und
Fig. 4 ist eine Schnittansicht entlang der Schnittlinie B-B aus Fig. 2.

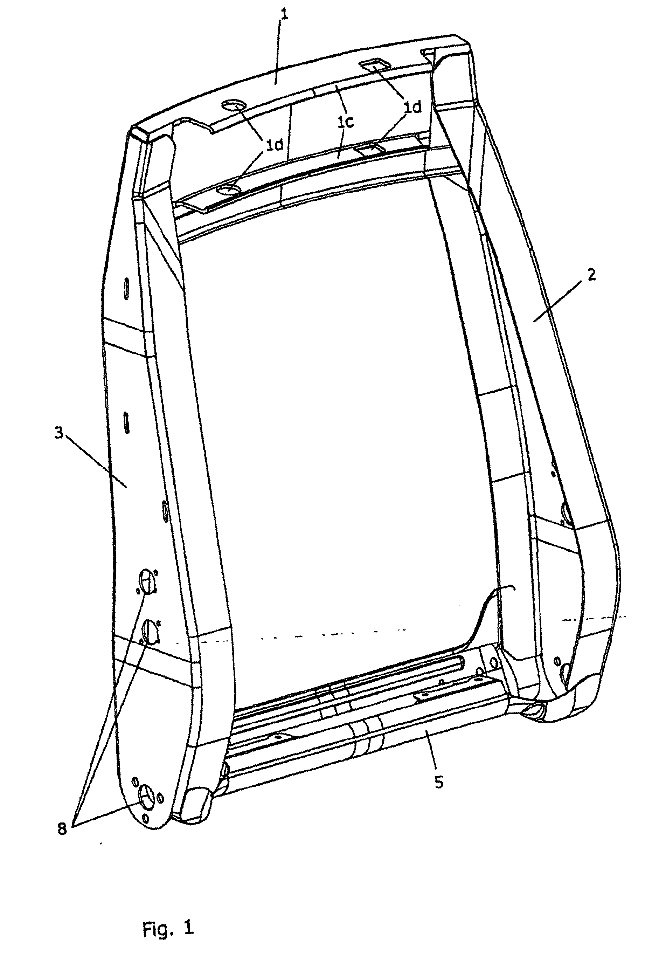

In Fig. 1 ist eine Lehne gemäß einer Ausführungsform der Erfindung in einer perspektivischen Ansicht dargestellt. Die Lehne umfasst zwei seitliche Holme 2, 3, die im Wesentlichen die seitliche Kontur der Lehne festlegen und die Befestigungsmöglichkeiten 8 für den Lehnenneigungsversteller und z. B. Seitenairbags aufweisen. Zur Erreichung einer stabilen Konstruktion sind die Holme 2, 3 an einem unteren Abschnitt durch einen Querträger 5 und in einem oberen Abschnitt durch einen Querträger 1 z.B. durch Schweiß- und/oder Schraubverbindungen verbunden. Die Seitenholme 2, 3, der Querträger 5 und der Querträger 1 können aus einem Metall, vorzugsweise Aluminium oder Magnesium, aus einer Metalllegierung, ebenfalls vorzugsweise eine Aluminium- oder Magnesiumlegierung oder auch aus einem die benötigten mechanischen Eigenschaften aufweisenden Kunststoff gebildet sein.

Der Querträger 1 weist zwei Flansche 1c auf, die mit Ausnahme an den Endabschnitten des Querträgers 1, an denen dieser mit den Seitenholmen 2, 3 verbunden ist, über die gesamte Länge des Querträgers sich erstrecken. Die beiden Flansche 1c weisen jeweils koaxial zueinander angeordnete Öffnungen 1d für die Aufnahme der Streben einer Kopfstütze 7 auf.

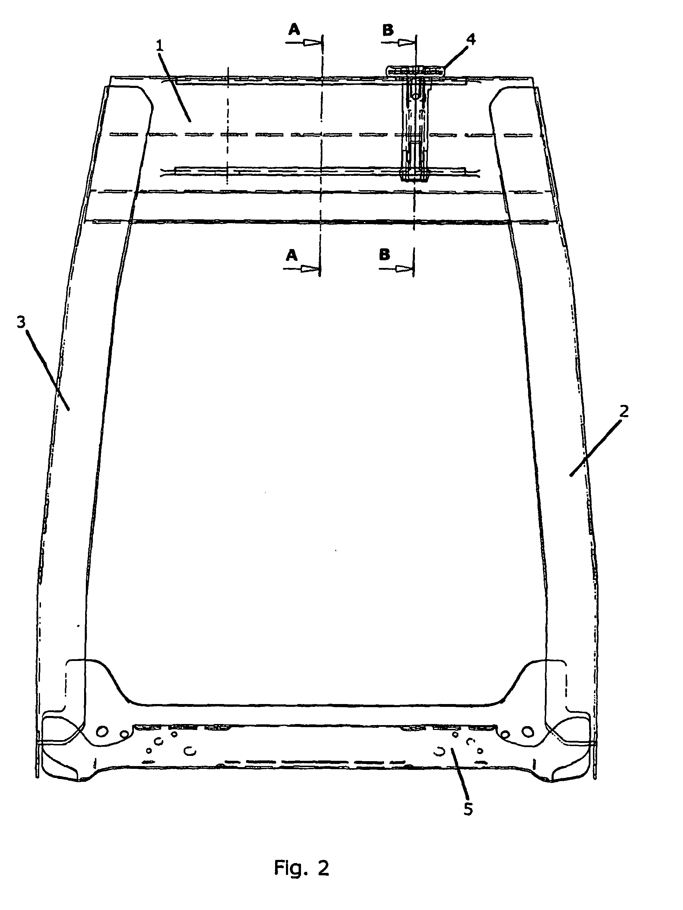

In Fig. 2 ist die Lehne aus Fig. 1 von vorne dargestellt, in der die Lage der im Folgenden erläuterten Schnittansichten durch die Schnittlinien A-A und B-B angegeben ist. Weiterhin ist in Fig. 2 eine Führung 4 dargestellt, mittels derer die Kopfstütze (nicht gezeigt) in der Höhe verstellt werden kann.

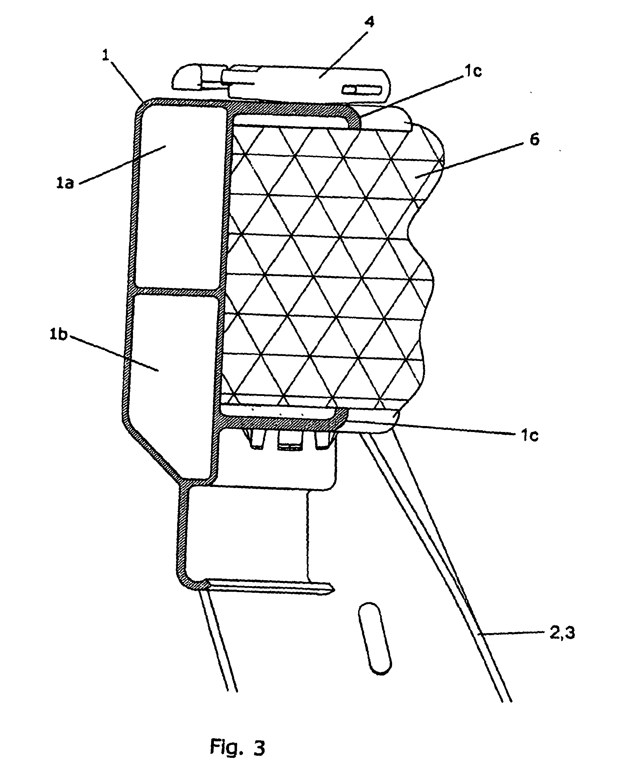

Fig. 3 zeigt eine Schnittansicht entlang der Schnittlinie A-A aus Fig. 2, aus der ersichtlich ist, dass der Querträger 1 über im Wesentlichen die gesamte Breite der Lehne ein hohlprofilförmiges Strangpressprofil ist mit zwei Kammern bzw. Hohlräumen 1a, 1b, die einen im Wesentlichen rechteckigen Querschnitt aufweisen. Die Querschnittsform der Kammern 1a, 1b ist nicht auf die dargestellte Form beschränkt und es können Strangpressprofile mit anderen Querschnitten und einer anderen Anzahl an Kammern 1b verwendet werden. Von diesem Strangpressprofil erstrecken sich L-förmige Flansche 1c, die einteilig mit dem Querträger 1 ausgebildet sind. Der in Fig. 3 dargestellte obere Flansch 1c verläuft dabei bündig mit der Oberkante des Querträgers 1, und der untere Flansch ist von der Unterkante des Querträgers 1 beabstandet. Jeder Kammer 1a, 1b des Querträgers ist ein Flansch 1c zugeordnet.

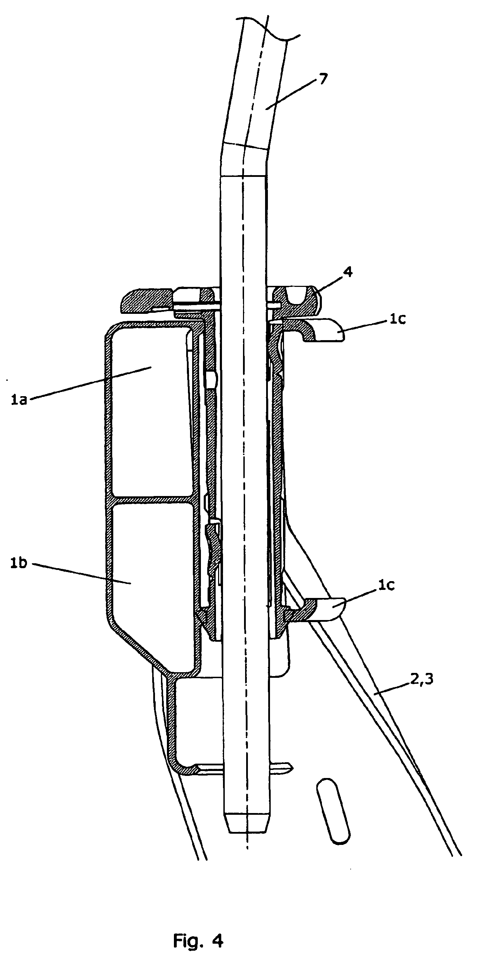

Einerseits dienen die Flansche 1c zur Aufnahme der Führungen 4 bzw. der Streben der Kopfstütze 7 (siehe Fig. 4), andererseits wird durch die Anordnung der Flansche 1c und deren Dimensionierung senkrecht zum Querträger 1 zusätzlicher Bauraum für den Lehnenschaum 6 geschaffen. Dadurch kann der Lehnenschaum 6 im Bereich der Schulterpartie des Insassen sehr voluminös ausgestaltet werden, wodurch der Oberkörper bzw. die Schulterpartie des Insassen im Falle einer Kollision des Fahrzeuges sehr weit in die Lehne eintauchen kann, ohne dass es dabei zu einer Relativbewegung des Kopfes gegenüber dem Oberkörper des Insassen kommt.

In Fig. 4 ist der Querträger 1 in einer Schnittansicht entlang der Schnittlinie B-B aus Fig. 2, d. h. entlang der eingesetzten Führung 4 für eine Kopfstütze, dargestellt. In Fig. 4 ist die Führung 4 rohrförmig ausgebildet und sind die Öffnungen 1d koaxial zueinander angeordnet. Es ist auch denkbar, dass die Verschiebung der Kopfstütze eine Kreisbahn beschreibt und die Führung 4 bzw. die Öffnungen 1d entsprechend angepasst bzw. angeordnet sind. Weiterhin ist in Fig. 4 eine in die Führung 4 eingesetzte Strebe einer Kopfstütze 7 gezeigt. Mittels der Führung 4 ist die Kopfstütze 7 über ihre Streben in der Höhe verstellbar.

Ist im Kollisionsfall des Fahrzeuges bei niedriger Geschwindigkeit, beispielsweise 5-50 km/h, die Aufprallenergie des Oberkörpers des Insassen auf die Lehne derart groß, dass beim Eintauchen der Oberkörper in Kontakt mit den beiden Flanschen 1c kommt, können diese sich deformieren, wodurch durch die plastische Verformung der Flansche 1c zusätzlich Energie absorbiert wird, ohne dass der dahinterliegende Querträger beschädigt und die Steifigkeit der Kopfstütze beeinträchtigt wird. Durch die Deformation der Flansche 1c wird ein noch tieferes Eintauchen der Schulterpartie des Insassen in die Lehne ermöglicht und der Kopf in Anlage mit der Kopfstütze gebracht. Dabei wird eine Torsionskraft um die Längsachse des Querträgers 3 auf diesen ausgeübt und in diesen eingeleitet. Aufgrund der konstruktiven Ausgestaltung des Querträgers 1 als Strangpressprofil mit Hohlprofil hat dieser einen sehr hohen Torsionswiderstand, mit der Folge, dass der Kopf des Insassen nicht weiter nach hinten verlagert wird, wodurch eine übermäßige Bewegung der Halswirbel vermieden wird. Es findet somit, wie oben ausgeführt, lediglich eine Rotation des Oberkörpers und des Kopfes des Insassen um das Hüftgelenk statt, wodurch das Risiko einer Verletzung der Halswirbel bzw. eines Schleudertraumas minimiert wird. Ebenso ist es möglich, dass bei plastischer Deformation der Flansche 1c durch Abknicken nach unten die Kopfstütze in Richtung Kopf des Insassen bewegt wird und somit der Kopf frühzeitiger in Anlage mit der Kopfstütze gebracht wird, wodurch im Kollisionsfall eine Verlagerung des Kopfes weiter begrenzt ist.

Wie aus dem Obigen klar verständlich, können mit der erfindungsgemäßen Lehne Nackenwirbelsäulenverletzungen und das Risiko eines Schleudertraumas vermieden bzw. verringert werden.

## Patentansprüche

1. Lehne für einen Sitz eines Kraftfahrzeuges, mit einem als Hohlprofil ausgebildeten Querträger (1) zur Befestigung einer Kopfstütze (7) und mindestens einem Deformationselement (1c), das zur Aufnahme einer senkrecht zum Querträger (1) wirkenden Kraft angeordnet ist, **dadurch gekennzeichnet, dass** das Deformationselement (1c) zur Aufnahme des Lehnenpolsters (6) ausgebildet ist, wodurch zusätzlicher Bauraum für das im Bereich der Schulterpartie sehr voluminös ausgestalteten Lehnenpolsters geschaffen wird.

2. Lehne nach Anspruch 1, **dadurch gekennzeichnet, dass** der Querträger (1) ein Strangpressprofil ist.

3. Lehne nach Anspruch 1 oder 2, **dadurch gekennzeichnet, dass** der Querträger (1) über seine gesamte Länge als Hohlprofil ausgebildet ist.

4. Lehne nach einem der vorhergehenden Ansprüche, **dadurch gekennzeichnet, dass** der Querträger (1) zwei vertikal übereinander angeordnete Hohlräume (1a, 1b) aufweist.

5. Lehne nach einem der vorhergehenden Ansprüche, **dadurch gekennzeichnet, dass** das Deformationselement (1c) derart ausgebildet ist, dass es im Kollisionsfall des Kraftfahrzeuges bei einer Geschwindigkeit im Bereich von 5-50 km/h durch den Schulterbereich der auf dem Sitz befindlichen Person plastisch deformiert wird.

6. Lehne nach einem der vorhergehenden Ansprüche, **dadurch gekennzeichnet, dass** das Deformationselement (1c) einteilig mit dem Querträger (1) ausgebildet ist.

7. Lehne nach einem der vorhergehenden Ansprüche, **dadurch gekennzeichnet, dass** das Deformationselement (1c) L-förmig ausgebildet ist und senkrecht zur Längsachse des Querträgers (1) verläuft.

8. Lehne nach einem der vorhergehenden Ansprüche, **dadurch gekennzeichnet, dass** zwei Deformationselemente (1c) vorgesehen sind, wobei ein Deformationselement (1c) bündig mit einer Oberkante des Querträgers (1) und das andere Deformationselement von der Unterkante des Querträgers (1) beabstandet angeordnet ist.

9. Lehne nach Anspruch 8, **dadurch gekennzeichnet, dass** in den beiden Deformationselementen (1c) jeweils eine Öffnung zur Aufnahme einer Strebe der Kopfstütze (7) vorgesehen ist und die Öffnungen koaxial zueinander angeordnet sind.

## Claims

1. Backrest for a seat of an automotive vehicle, with a cross member (1) designed as a hollow section for fixing a headrest (7) and at least one deformation element (1c) which is arranged to accommodate a force acting perpendicularly to the cross member (1), **characterised in that** the deformation element (1c) is designed to accommodate the backrest pad (6), through which additional structural space is created for the backrest pad designed to be very voluminous in the area of the shoulder region.

2. Backrest according to claim 1, **characterised in that** the cross member (1) is an extruded section.

3. Backrest according to claim 1 or 2, **characterised in that** the cross member (1) is designed as a hollow section over its entire length.

4. Backrest according to one of the preceding claims, **characterised in that** the cross member (1) has two cavities (1a, 1b) arranged vertically on top of each other.

5. Backrest according to one of the preceding claims, **characterised in that** the deformation element (1c) is designed in such a way that in the event of a collision of the automotive vehicle at a speed in the range of 5-50 km/h it is plastically deformed by the shoulder region of the person located on the seat.

6. Backrest according to one of the preceding claims, **characterised in that** the deformation element (1c) is designed in one piece with the cross-member (1).

7. Backrest according to one of the preceding claims, **characterised in that** the deformation element (1c) is designed L-shaped and runs perpendicularly to the longitudinal axis of the cross member (1).

8. Backrest according to one of the preceding claims, **characterised in that** the two deformation elements (1c) are provided, in which one deformation element (1c) is arranged flush with the top edge of the cross member (1) and the other deformation element at a distance to the bottom edge of the cross member (1).

9. Backrest according to claim 8, **characterised in that** in both deformation elements (1c) an opening to accommodate a brace for the backrest (7) is provided in each and the openings are arranged coaxially to each other.

## Revendications

1. Dossier pour un siège d'un véhicule automobile, avec une traverse (1) réalisée comme un profilé creux pour la fixation d'un appuie-tête (7) et au moins un élément de déformation (1c) qui est disposé pour recevoir une force agissant perpendiculairement à la traverse (1c), **caractérisé en ce que** l'élément de déformation (1c) est réalisé pour recevoir le rembourrage du dossier (6), par auquel un espace de construction supplémentaire est créé pour le rembourrage du dossier configuré de manière très volumineuse dans la zone de la partie des épaules.

2. Dossier selon la revendication 1, **caractérisé en ce que** la traverse (1) est un profilé extrudé.

3. Dossier selon la revendication 1 ou 2, **caractérisé en ce que** la traverse (1) est réalisée comme un profilé creux sur toute sa longueur.

4. Dossier selon l'une quelconque des revendications précédentes, **caractérisé en ce que** la traverse (1) présente deux espaces creux (1a, 1b) disposés verticalement l'un au-dessus de l'autre.

5. Dossier selon l'une quelconque des revendications précédentes, **caractérisé en ce que** l'élément de déformation (1c) est réalisé de manière à ce qu'il soit déformé plastiquement en cas de collision du véhicule automobile à une vitesse dans la plage de 5 à 50 km/h par la zone des épaules de la personne se trouvant sur le siège.

6. Dossier selon l'une quelconque des revendications précédentes, **caractérisé en ce que** l'élément de déformation (1c) est réalisé d'un seul tenant avec la traverse (1).

7. Dossier selon l'une quelconque des revendications précédentes, **caractérisé en ce que** l'élément de déformation (1c) est réalisé en forme de L et s'étend perpendiculairement à l'axe longitudinal de la traverse (1).

8. Dossier selon l'une quelconque des revendications précédentes, **caractérisé en ce que** deux éléments de déformation (1c) sont prévus, un élément de déformation (1c) étant disposé à fleur d'une arête supérieure de la traverse (1) et l'autre élément de déformation à distance de l'arête inférieure de la traverse (1).

9. Dossier selon la revendication 8, **caractérisé en ce que** dans les deux éléments de déformation (1c) est prévue respectivement une ouverture destinée à recevoir une barre de renfort de l'appuie-tête (7) et les ouvertures sont disposées coaxialement l'une par rapport à l'autre.
